# EUROPEAN PATENT SPECIFICATION

(11) **EP 0 812 757 B1**
(45) Date of publication and mention of the grant of the patent: **12.09.2001**
(21) Application number: 95942216.3
(22) Date of filing: 29.12.1995
(51) Int. Cl.: B62D 31/02

(54) **LOW FLOOR SUSPENDED VEHICULE INTENDED TO THE URBAN COLLECTIVE TRANSPORT**
NIEDERFLURFAHRZEUG ZUR PERSONENBEFÖRDERUNG IM NAHVERKEHR
VEHICULE SUSPENDU A PLANCHER ABAISSE DESTINE AU TRANSPORT COLLECTIF URBAIN

(30) Priority: 21.12.1995 ES 9500250
(43) Date of publication of application: 17.12.1997
(73) Proprietor: Talleres Creativos Andaluces, S.L., 28016 Madrid (ES)
(72) Inventor: SANCHEZ MILLON, Carmen, E-28016 Madrid (ES)
(74) Representative: Urizar Anasagasti, José Antonio
(86) International application number: ES9500159
(87) International publication number: WO9723378

(56) References cited:
- EP-A- 0 237 859
- EP-A- 0 244 371
- ES-A- 403 843
- US-A- 4 358 914
- US-A- 4 685 858
- US-A- 5 193 849

## Description

This specification refers, as its title indicates, to a low floor suspended vehicle designed for urban public transport and which presents some important advantages compared with currently existing low floor vehicles.

Modern societies provoke important problems of infrastructures for elderly and handicapped people or, in general, those with reduced mobility. Hence, transport represents an important topic when it implies considerable difficulties for people having reduced mobility.

Among the different means of urban transport, low floor buses are well known, characterized in that their floors are at the same level as conventional footways, in this way facilitating the access of all citizens, both the elderly and the handicapped and including people with packages, luggage, small children etc., as well as the remaining users. Since a large part of the internal surface does not have any steps, such that once the passenger gets in through the entrance door, it is possible for him/her to move inside towards the exit door without having to encounter differences of height.

Currently, different models of low floor buses are known and which have determined disadvantages. Among them, the fact that in current designs, it is impossible to reduce the height of the platform or low floor without reducing the space between the ground and the bus body to non-admissible values, which has led, in many cases, to the incorporation, on one hand of access ramps to facilitate the entrance and exit of people with general reduced mobility, and, more specifically, users with wheel chairs, and, on the other, of vehicle suspension lifting system to avoid existing obstacles in the causeway. However, in many cases there is only a ramp at one of the doors, obliging the users of the same to use it in the opposite sense to the rest of the users, hence hindering the exit or entrance of the remaining passengers, in this way extending the stopping time even more, already longer than usual due to the extending/folding of the ramp. Likewise, most vehicles currently existing do not permit a flow of wheel chair users or passengers with reduced mobility in general, in resonance with the remaining users, due to the shape and dimensions of the usable space inside said vehicles. It should be said that many of the adapted bases are low floor versions based on pre-existing bus designs, such that the basic project ideas of the latter are maintained. Finally, in many low floor buses, the space between the ground and the vehicle body has been reduced to such a point that it prevents their use in determined routes, including, for example, important changes of gradient in specific points of the route.

More specifically, a low floor bus model is known whose platform or low floor extends horizontally from the first doors towards the center ones, being inclined as from the latter and to the end with the slight gradient, locating the access step of both entrances at a height of 320 mm above the street level. The vehicle engine is longitudinally mounted on the left side of the upper part of the chassis, with a small inclination. Likewise, other devices, such as the fuel tank, cooling system, lubrication deposit, etc., are distributed either in the rear part or in the lower part of the bus. The existence of bus components located in the lower part thereof, under the passenger platform of the vehicle, reduces the height of the space between the ground and the lowest point of the vehicle body, which obliges the installation of electronically operated level valves, permitting among other functions, that the bus raises the vehicle suspension by 80 mm, so as to avoid obstacles in the highway. Nevertheless, even with the latter, the limitation of using the vehicle in routes including, for example, important changes of gradient, due to reduced dimensions of the space between the ground and the lowest point of the vehicle body, continues. These same components located in the lower part of the vehicle oblige the introduction of determined structures in the vehicle passenger space to install them without having to reduce the space between the ground and the vehicle body to non-admissible dimensions. Therefore, the seats located over the engine and the rear axle require a pedestal to situate them suitably, hence hindering and/or impeding their use by elderly and handicapped people or, generally, those with reduced mobility. For the same reason, the optional addition of a rear door implies that this should have two access steps, likewise hindering and/or preventing its use by elderly and handicapped people and, those generally, with reduced mobility.

A low floor articulated bus model is also known, the articulated version of the vehicle described in the previous paragraph, presenting basically the same disadvantages as the previous model, without incorporating, in said case, the electronically operated level valves permitting the elevation of the vehicle suspension, to overcome obstacles in the public highway, hence limiting its use even more in routes including, for example, important changes in gradient.

Likewise, a wide range of low floor buses exist, where the power unit is located on the left side and between the axles under the seats, situating the accesses at 330 mm from the ground. The position of the engine and the transits of the rear wheels conditions the assembly of a determined number of seats over a pedestal, hindering and/or preventing their use by elderly and handicapped people, or, generally, those with reduced mobility. On the other hand, this range of buses, presents a minimum width of the internal corridor, hindering or preventing suitable movement across the same, by handicapped people, with reduced mobility and, particularly users of wheel chairs or people with babies' prams. This obliged that these vehicles were equipped with one or several platforms, depending on the specific model, with capacity to transport two passenger in wheel chairs on each one of the platforms, obliging that these used a single entrance and exit door, hindering and impeding the loading and unloading processes of passengers at the stops. Therefore, it is important to mention that these vehicles do not permit a flow of wheel chair users, parallel to that of the remaining users, hindering accessibility and provoking a certain discrimination in relation to the remaining users.

Other bus manufacturers have other low floor bus models, where the front access platform is located at 317 mm from the ground and the rear access platform at 320 mm from the ground or 340 mm, depending on the specific model, locating different mechanical components of the vehicle under the platform, in this way reducing the space between the ground and the bus body, obliging some seats to be equipped with pedestals, hence reducing the minimum width of the corridor. On the other hand, the engine is situated in the rear side obliging the difference of height between the front part and the rear part of the vehicle to be reduced with an internal step or ramp having a small gradient, which determines the presence of an access step at the rear doors, in this way, hindering the access through them of handicapped people or those with a general reduced mobility, hence reducing the flow of these users to determined areas of the internal space of the bus.

Likewise, another range of low floor buses may be mentioned, which locate the height of the front door at 320 mm from the ground or 317 mm, depending on the specific model and 340 mm, at the remaining doors, adding at the third and fourth doors of the articulated models and access step. The location in the lower part of the engine and the other mechanical components of the bus again determines the presence of pedestals for the seats, reducing the minimum width of the internal corridor, the existence of special platforms for wheel chair users, people with babies' prams, etc., as well as the location of a transverse step in the internal space of the vehicle. All the latter limits the use and access by elderly and handicapped people or, in general, those with reduced mobility to determined points of the internal space of the vehicle, differentiating the flow of these users with the remaining passengers, with the consequent difficulty of accessibility and its relative discrimination compared with the remaining users.

Therefore, it is observed that in currently existing low floor bus models, based on designs locating both the engine and other components, whether mechanical or not, of the vehicle in its lower part, present different disadvantages, such as the fact of offering a space between the ground and the lowest point of the bus body, of excessively reduced dimensions, disabling it for routes including, for example, important changes of gradient; the need to include different components to adequate the vehicle mechanics inside the vehicle provoking a narrowing the minimum width of the internal corridor, as well as the difference of height between the front door(s) and the rear door(s).

The object of the present invention is to provide a low floor bus vehicle applicable to urban public transport, satisfying the current regulations for urban public transport, and which permits the efficient rectification of the deficits presented by currently existing low floor buses, hence facilitating its use by elderly and handicapped people, and, generally, those with reduced mobility.

The low floor suspended vehicle applicable to urban public transport and object of this invention, consists of a specially designed framework structure to house most of the mechanical components of the vehicle in the upper part of its structure, that is, on its roof. The vehicle structure, object of the invention, differs from the traditional structure in lower framework, to situate it on the upper side of the bus structure, such that must of all the parts integrating the bus hang from the upper side structure, forming a spacial assembly. On suspending most components from the upper framework by means of framework girders, it is possible to reduce the height of the platform or low floor without reducing the space between the ground and the vehicle body to non-admissible values, in this way forming an entrance angle with the vehicle, defined as the angle formed by the horizontal line and the imaginary continuous line extending towards the front of the vehicle without cutting its chassis, plotted by joining the support point of the tires of the front axle over the horizontal and the lowest point of the front part of the vehicle, an exit angle of the vehicle, defined as the angle formed by the horizontal line and the imaginary continuous line extending towards the rear part of the vehicle without cutting its chassis, plotted by joining the support point of the tires of the rear axle over the horizontal and the lowest point of the rear part of the vehicle; and an internal angle of the vehicle, defined as the angle formed by the horizontal line and the imaginary line plotted by joining the support point of the tires of the front axle over the horizontal and the lowest points of the middle part of the vehicle, with values suitable for accesses to workshops and garages of the fleet and maintenance, as well as for the circulation of the bus along routes including important changes of gradient. Furthermore, the non inclusion of components in to the passenger space of the bus allows the use or access to determined areas of the bus by elderly or handicapped people or, in general, for those with a reduced mobility, without resulting in a certain discrimination of these people compared with the remaining users.

More specifically, for the vehicle body and chassis, object of this invention, a structure has been designed with a left side, a right side, a front, a rear, a deck and a roof, satisfying the structural resistance for the load states and services foreseen, consisting of a series of vertical, horizontal and diagonal pillars, as well as an upper side framework truss beams. In this way, between the vertical pillars, there are a series of basic pillars to support the components located in the upper part of the vehicle, being uniformly distributed on the left and right sides of the vehicle.

Likewise, the front and rear approach angles, as well as their free heights, that is, the dimensions of the space between the ground and the lowest point of the vehicle body, are the most important geometrical characteristics defining the manoeuvering capacity of the bus. In the low floor suspended vehicle applicable to urban public transport, object of this invention, it is possible to increase, thanks to the location of many of its components on the upper part of the vehicle, the dimensions of the space between the ground and the lowest point of the vehicle body, enabling the use of the vehicle for most of the route, including those points having important changes of gradient of the surface along some points of the route, likewise permitting the use of the majority of the coach sheds designed for conventional buses. The presence of front and rear approach angles also contributes to the latter, or entrance and exit angles, as well as an internal angle, situated in the middle part.

The location of the engine unit is such that it does not produce an important reduction of the useful surface for passengers. Hence, the engine is installed crossing the rear part of the bus, object of this invention, and is located in a compartment separated from the passenger space by a partition wall, in this way permitting that all the access doors to the vehicle are located at the same height.

The dimensions of the front and rear axles define the minimum width of the internal corridor. The non-standard design of these axles in the low floor suspended vehicle, applicable to urban public transport, object of this invention, gives as a result a greater distance between axles, hence defining an internal corridor with sufficiently wide dimensions to permit any passenger, including elderly and handicapped people or, generally, those with reduced mobility, and particularly wheel chair users, to have access to the bus through an entrance door, located, for example, in the front part of the vehicle, and leave through a different exit door, located, for example, in the middle and/or rear part of the vehicle, in this way avoiding the discrimination of handicapped people, or, in general, those with reduced mobility and, particularly, wheel chair users, in comparison with the remaining users.

The remaining components, whether mechanical or not, of the low floor suspended vehicle applicable to urban public transport, object of this invention, are based on currently existing components, fully verified, and adapted to fulfill the current regulations regarding urban public transport.

Likewise, optionally, the low floor suspended vehicle applicable to urban public transport, object of this invention, may be equipped with a rolling mechanism belonging to the shock absorbing system to make the vehicle incline sideways or to descend by several centimeters.

Likewise, the entrance and/or exit doors of the vehicle, object of this invention, may be optionally equipped with retractable ramps adjustable in their unfolding, with a gradient suitable for the dimensions and the situation of the center of gravity of wheel chairs, due to the fact, as is known, that wheel chairs have a small distance between their axles and the center of gravity is located in the rear part, in this way conditioning the maximum gradient of the ramp.

All these optional improvements are made to facilitate the entrance and/or exit of all the bus users to the interior of the vehicle. In this way, in the case of a person with reduced mobility in general, and particularly, a wheel chair user or a person with a babies' pram, the vehicle driver may opt to incline the bus over its right side or unfold the access ramp(s) corresponding to the door(s) through which the above mentioned passenger desires to enter and/or leave.

To better understand the object of the present invention, a prefered practical embodiment of the low floor suspended vehicle applicable to urban public transport, is described below, based on the attached figures. In said figures the following is shown:

Figure 1 shows a front perspective view of the global low floor bus structure applicable to urban public transport, which is built as from the assembly of a right lateral truss beam (RL), a left lateral truss beam (LL), a front structure (FS), a rear structure (RS), an upper or roof structure (US) and a lower or deck structure (DS), shown in detail in the following figures.

Figure 2 shows the elevation of the right lateral truss beam (RL) of the complete structure of the vehicle represented in figure 1.

Figure 3, shows the elevation of the left lateral truss beam (LL) of the complete structure of the vehicle represented in figure 1.

Figure 4 shows the elevation of the front structure (FS) of the complete structure of the vehicle represented in figure 1.

Figure 5, shows the side view of the front structure (FS) of the complete structure of the vehicle represented in figure 1.

Figure 6 shows the elevation of the rear structure (RS) of the complete structure of the vehicle represented in figure 1.

Figure 7, shows the side view of the rear structure (RS) of the complete structure of the vehicle represented in figure 1.

Figure 8 shows the elevation of the upper structure (US) or roof of the complete structure of the vehicle represented in figure 1.

Figure 9, shows the side view of the upper structure (US) or roof of the complete structure of the vehicle represented in figure 1.

Figure 10 shows the section along the line AA' of the upper structure (US) or roof of the complete structure of the vehicle represented in figure 1.

Figure 11, shows the elevation of the lower structure (DS) or deck of the complete structure of the vehicle represented in figure 1.

Figure 12, shows the right side view of the low floor bus, applicable to urban public transport, once the construction of its body has finished.

Figure 13, shows a rear perspective view of the internal passenger space of the low floor bus applicable to urban public transport, once the lower structure or deck have been covered, reserving the space suitable for locating the transits of the front and rear wheels, the location of the doors, as well as for the location of basic components like the gear-box, the engine, the transmission, the driving axle, the semi-axles and the suspension.

Figure 14, shows a perspective view of the preferable location of basic components like the gear-box, the engine, the transmission, the rear driving axle and semi-axles and rear suspension.

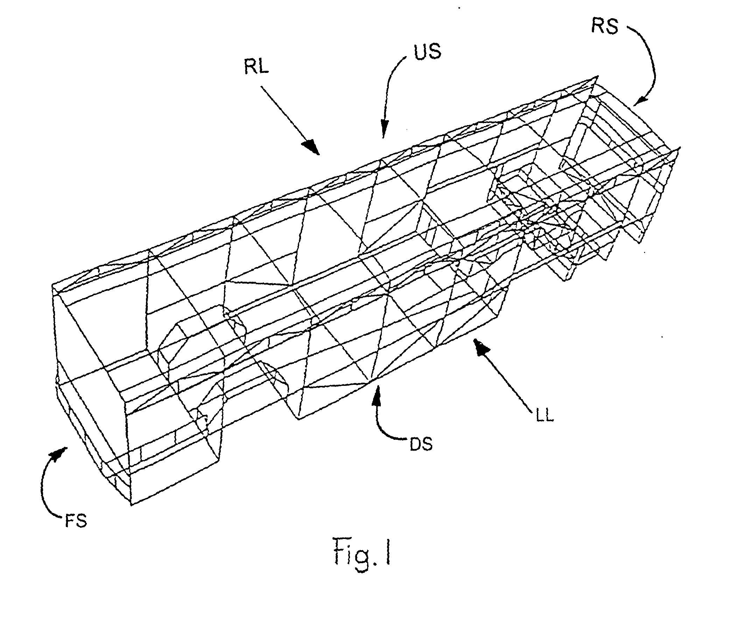

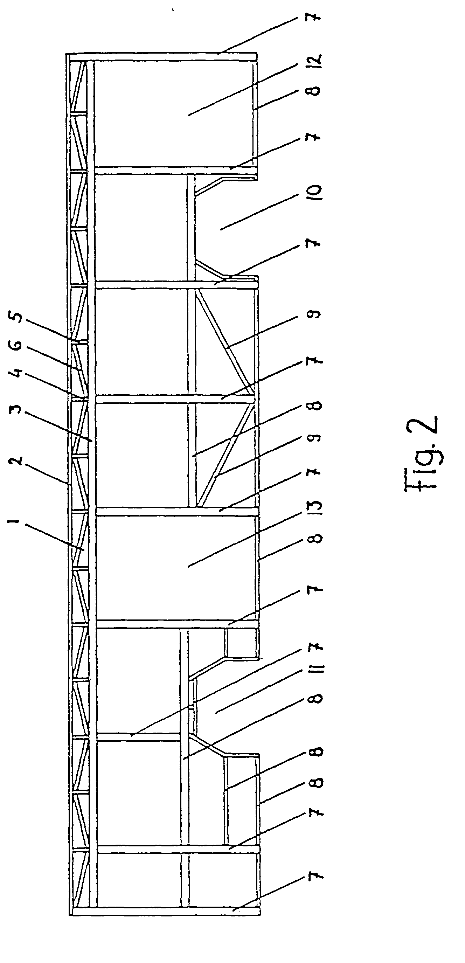

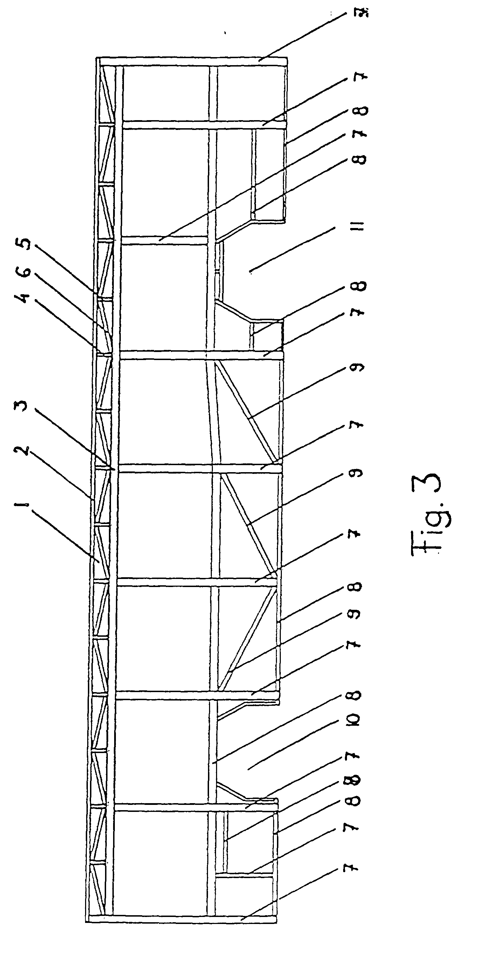

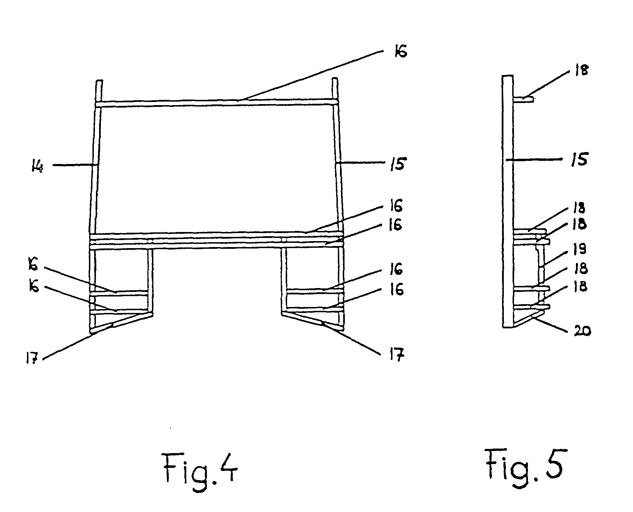

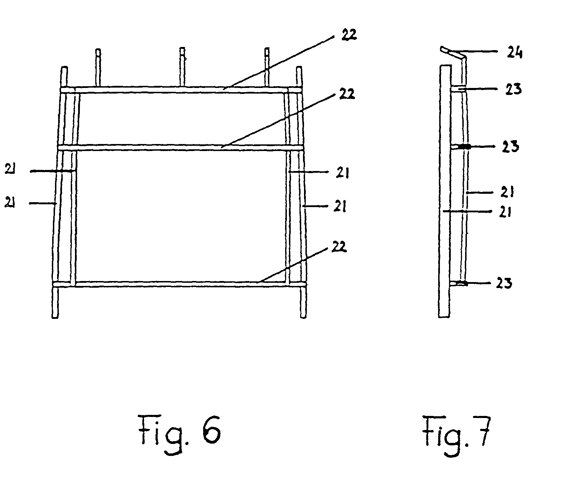

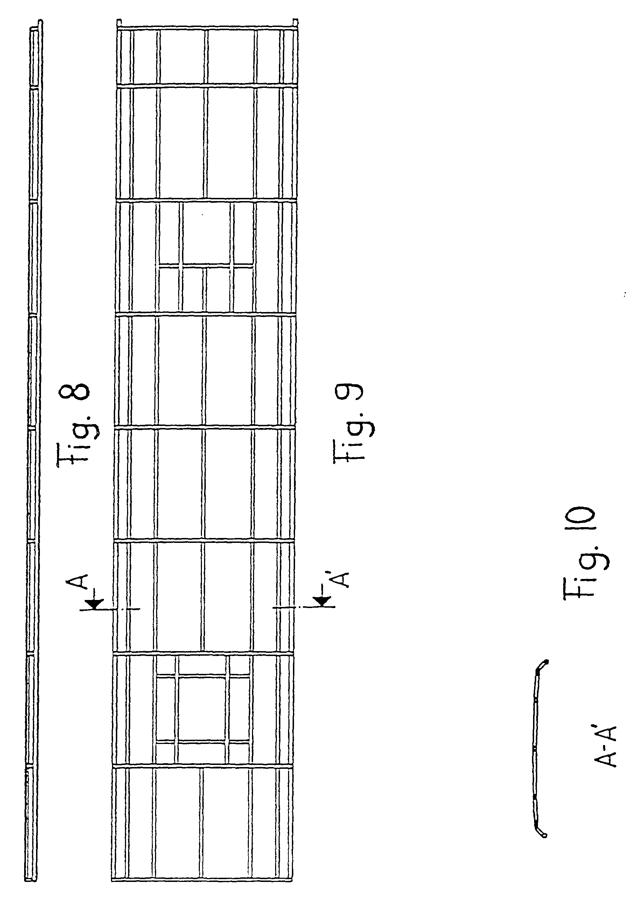

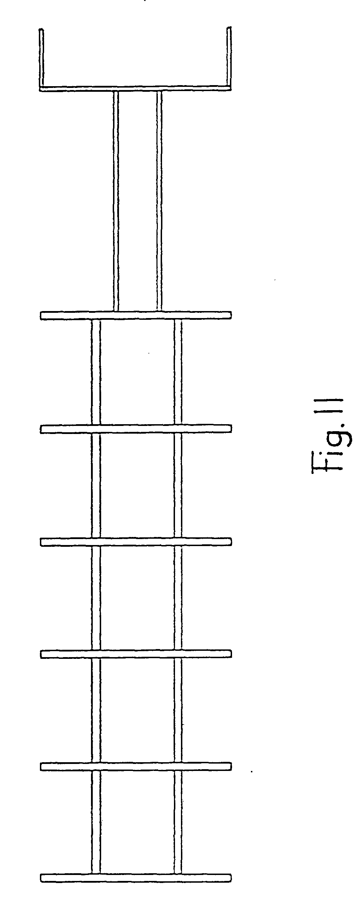

The prefered practical embodiment of the low floor suspended vehicle applicable to urban public transport starts by the definition of its structure characterizing it. The low floor suspended vehicle applicable to urban public transport, object of this invention, consists of a framework structure, specially designed to locate most mechanical components of the vehicle in the upper part of its structure. Hence, the prefered embodiment of the vehicle presents a global structure of the type represented in figure 1, which is preferentially built as from the assembly of a right lateral side wall truss beam (RL), a left lateral side wall truss beam (LL), a front structure (FS), a rear structure (RS), an upper or roof structure (US) and a lower or deck structure (DS). In this figure, the framework structure situated in the upper part of the vehicle, characterizing the latter, may be seen, which will permit the suspension of all the integrating components of the bus from the upper side truss beams forming a spacial assembly. Particularly, the right lateral side wall truss beams (RL) of the vehicle, shown in greater detail in figure 2, is preferentially built as from a first upper framework structure (1), preferably built from two horizontal bars (2,3) and from a series of rectangular contiguous cells defined preferably by two vertical pillars (4,5) and a diagonal bar (6) coinciding, alternatively, with each one of the diagonals of the rectangle. Beneath this framework structure (1), preferably a series of vertical (7), horizontal (8) and diagonal (9) pillars are extended, which determine the right side of the vehicle and which permit the support of the components located in the upper part of the vehicle, likewise including the corresponding front (10) and rear wheel (11) transits of dimensions satisfying current regulations for urban public transport and with an adequate distribution for the incorporation, in this prefered embodiment of a front door (12) and a middle door (13) with adequate dimensions to facilitate the entrance and exit of all the potential users of the low floor suspended vehicle, applicable to urban public transport including wheel chair users or users of reduced mobility in general, permitting a transit flow of the same parallel to that of the other users. Likewise, the left lateral side wall truss beam (LL) of the vehicle shown in greater detail in figure 3, is preferably built in a way totally similar to the right lateral side wall truss beam (RL) previously described, but, obviously, without presenting, in this case, the door openings to permit the exit and entrance of passengers, it being possible to observe again, the upper framework structure (1) identical to that described previously, for the right lateral truss beam and the vertical (7), horizontal (8) and diagonal (9) pillars to permit the support of the components situated in the upper part of the vehicle. Figures 4 and 5 show the front structure (FS) in more detail, defined in its elevation (figure 4) preferably by two vertical pillars (14,15) located at their ends and which are slightly inclined inwards, joining both vertical pillars (14,15) by means of a series of horizontal (16) and diagonal (17) bars, and defined at their sides (fig. 5) preferably by a series of horizontal bars (18) of different lengths, by a vertical stepped bar (19) and by a diagonal bar (20), assembling across these the lateral truss beams previously described. Figures 6 and 7 show the rear structure (RS) in greater detail and defined in its elevation (fig. 6) preferably by a series of vertical bars (21) slightly inclined inwards, preferably joined by means of a series of horizontal bars (22) and defined at its sides (figure 7) preferably by a series of horizontal bars (23) of different lengths, joined by a series of slightly inclined vertical bars (21) and a last upper bar (24) more inclined towards the interior of the passenger space of the vehicle, the side truss beams previously described being assembled across these. Figures 8, 9 and 10 show the upper or roof structure (US) in greater detail which is represented in its elevation (figure 8), side view (figure 9) and section along the line AA' (figure 10), it being possible to observe that it is preferably built by a structure presenting a slight curvature radius towards the inside of the passenger space of the vehicle and is defined by a series of crossed bars forming 90° angles, a rectangular cell framing resulting from this shape. Finally, figure 11 shows in greater detail the lower or deck structure (DS), built preferably of a flat structure defined by a series of crossed bars forming angles of 90°.

Once the previously described structure has been defined, the covering of the same exterior and interior with suitable materials is proceeded to, to define the vehicle body and characteristics such as its dimensions, its aerodynamic performance, its rigidity, etc., as well as the interior space, without loosing the perspective by which the vehicle design has been conceived, in accordance with the invention, like the fact of facilitating its use by any type of user, especially people with reduced mobility in general, and more specifically, wheel chair users, assuring, as far as possible, fundamental aspects such as aesthetics, maneuverability, etc. and always satisfying current regulations for vehicles of this type, that is, for urban public transport.

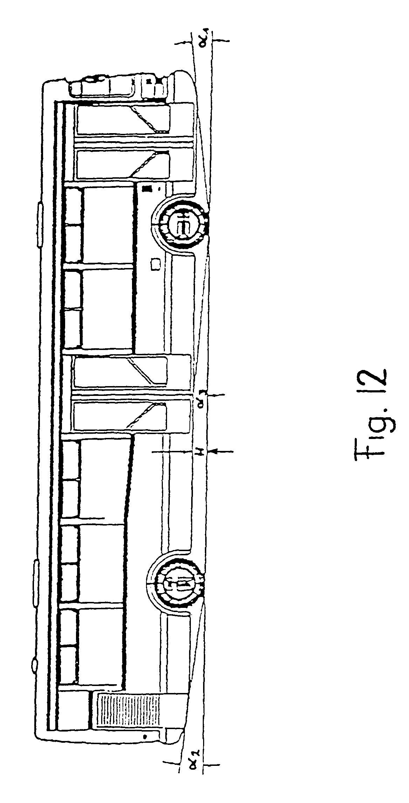

As is shown in figure 12, the suspension of most of the components of the upper framing by means of framework girders permits the height of the platform or low floor to be reduced, without reducing the height (H) of the space between the ground and the vehicle body to non-admissible values, in this way permitting the presence of entrance (α₁), exit (₂α) and interior₃ (α) angles respectively located, at the lower front part of the body, the lower rear part of the body and the lower middle part of the body, suitable for access to workshops and garages of the fleet and maintenance, as well as for the circulation of the vehicle along routes having important changes of gradient in the route. Figure 12 shows a right lateral view of the low floor bus applicable to urban public transport, once the construction of its body has been finished to adequately cover the previously described structure, where it is indicated that the height (H) of the space between the ground and the body is preferably a value between 250 mm; and, for the retractable ramp option the height is 270 mm, an entrance angle (α₁) located in the lower front part of the body and preferably having a value between 5° and 8° and more preferably 6°, an exit angle (α₂) located in the rear lower part of the body, preferably having a value between 6° and 9°, and more preferably 7°, and an interior angle (α₃) located at the middle lower part of the body and preferably having a value between 4° and 7°, and more preferably 5°.

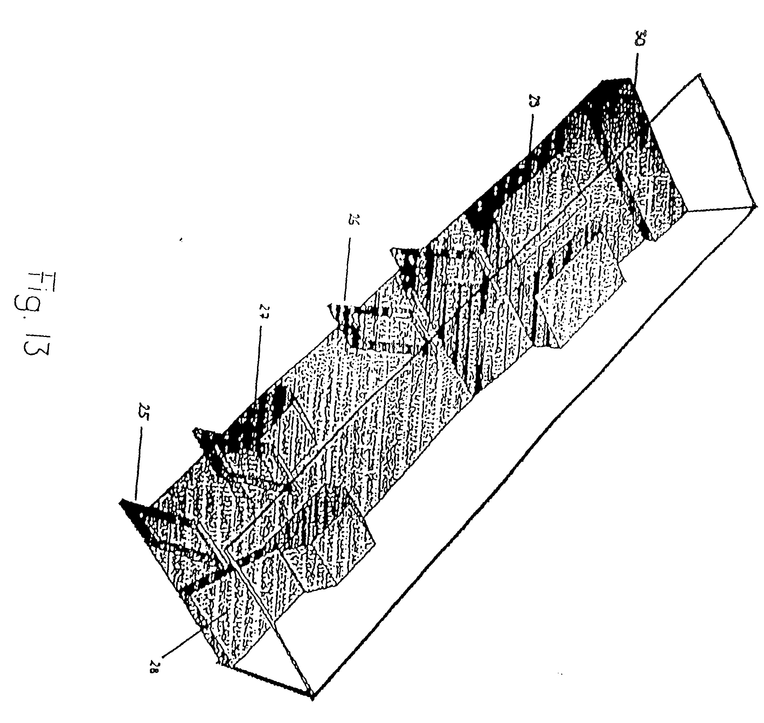

The covering of the lower structure or deck (DS) is made with a series of plates of preferably metallic or similar material, reserving the space suitable for the location of the front and rear wheel transits, the location of the doors, as well as the situation of the basic components, like the gear-box, the engine, the transmission, the driving axle, the semi-axles and the suspension, without losing the perspective with which the vehicle design had been conceived, in accordance with the invention, like the fact of facilitating its use by any type of user, especially people with reduced mobility in general, and more specifically, wheel chair users, as is shown in figure 13. All the latter, results in an interior space characterized by the presence of a wide central corridor, and the lack of steps in all the internal surface or in general, any type of obstacle that may hinder the flow of any passenger inside it. Hence, the part which extends between the front door (25) and the middle door (26) consists of a wide flat platform above whose level, only protrude the spaces reserved for the front wheel transits (27) and a small stand (28) for the location of the vehicle driver's seat, such that all the access doors to the vehicle are situated at the same height. The rear part of the vehicle, that is, the area of the interior space which extends behind the middle door (26), is elevated with a slight continuous gradient, due to the fact that beneath it, components will be located such as the transmission, the gear-box, the driving axle, as well as the engine which is installed by crossing the rear part of the bus, object of this invention, being located in a compartment separated from the passenger space by a partition wall. In this rear part, only the rear wheel transits (29) raise above the platform profile, said wheels being a little wider than the front ones, and a rear pedestal (30) crossing at its rear end the interior passenger space, beneath which is located the motory unit.

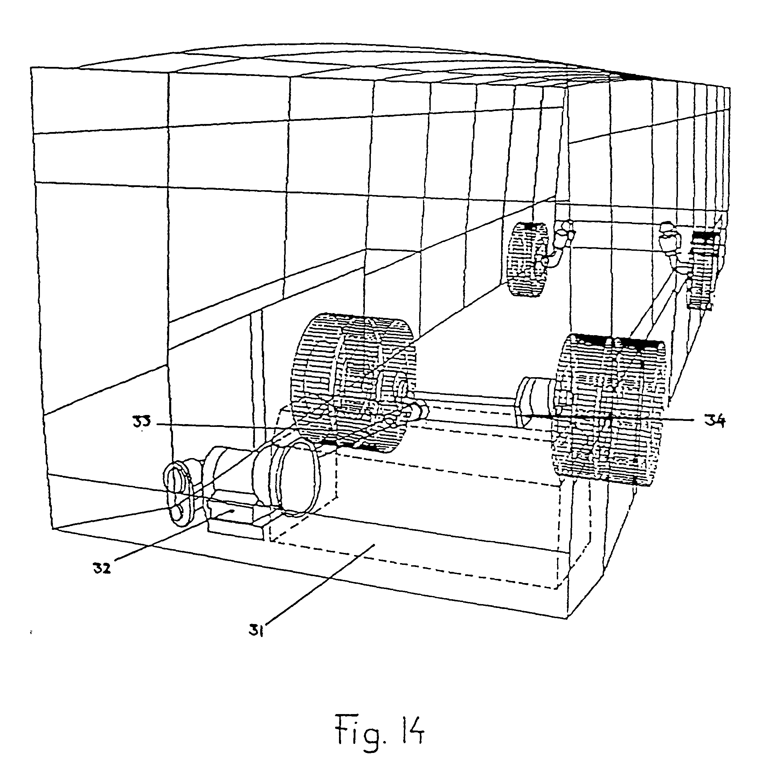

Once the external structure of the bus has been defined, its body, as well as the internal space of the bus, it is necessary to locate the assembly of the mechanical components of the bus, such as the vehicle engine, the transmission, the suspension components and other devices, such as the fuel tank, the cooling system, the lubrication deposit, etc. The mechanical components to be incorporated may be well known series components, used and widely verified in the manufacture of vehicles of this type. Figure 14 shows in rear perspective, the location of several basic components, such as the engine, preferably installed crossing the rear part of the bus, object of this invention, preferably located in a compartment (31) separated from the interior passenger space by a partition wall hence permitting that all the access doors to the vehicle are situated at the same height, the gear-box (32), preferably installed on the right side of the engine, in the lower rear part of the vehicle, from which the transmission (33) extends to join with the rear driving axle, preferably being, in this prefered practical embodiment of the invention a rear notched driving axle (34).

This previously described prefered practical embodiment may be complemented with a series of optional improvements intended to improve any of the vehicle characteristics such as comfort, accessibility, different mechanical properties, aesthetics, etc.

Hence, for example, the low floor suspended vehicle applicable to urban public transport, object of this invention, may be optionally equipped with a rolling mechanism belonging to the shock absorbing system to make the vehicle incline sideways or totally descend by several centimeters.

Likewise, the entrance and/or exit doors of the vehicle, object of this invention, may be optionally equipped with retractable ramps adjustable in their unfolding, with a gradient suited to the dimensions and the location of the center of gravity of wheel chairs, given that, as is well known, wheel chairs have little distance between their axles and the center of gravity is located in the rear part, thus conditioning the maximum gradient of the ramp.

Once the nature of this invention has been sufficiently described, as well as a way or putting in into practice, we only have to add that as a whole and considering part by part, it is possible to introduce changes of form, materials, and arrangement, provided that said alterations do not substantially vary the characteristics of the invention claimed below.

## Claims

1. Low floor suspended vehicle applicable to urban public transport, whose body and chassis defines a left lateral truss beam (LL) , right lateral truss beam (RL), front structure (FS) , rear structure (RS) , deck structure (DS) and roof structure (US), and which present a reduction of height of the platform or low floor without a non-admissible reduction of the space between the ground and the vehicle body, **characterized in that** it presents a framework structure (1), situated in the upper part of its right lateral truss beam (RL) and left lateral truss beam (LL) of the vehicle structure, suitable that the primary load-bearing parts of the vehicle body are the upper right and left lateral truss beams, so that its lower deck structure consists of a flat structure, such that the height (H) of the space between the ground and the vehicle body has a value of 250 mm; the vehicle entrance angle (α₁), defined as the angle formed by the horizontal line and the imaginary continuous line extending towards the front of the vehicle without cutting its chassis, plotted by joining the support point of the tires of the front axle over the horizontal and the lowest point of the front part of the vehicle, having a value between 5° and 8°, preferably, 6°; the vehicle exit angle (α₂) defined as the angle formed by the horizontal line and the imaginary continuous line extending towards the rear part of the vehicle, without cutting its chassis, plotted by joining the support point of the tires of the rear axle over the horizontal, and the lowest point of the rear part of the vehicle, having a value between 6° and 9°, preferably, 7°; and the vehicle interior angle (α₃) defined as the angle formed by the horizontal line and the imaginary line plotted by joining the support point of the tires of the front axle over the horizontal and the lowest point of the middle part of the vehicle, having a value between 4° and 7°, preferably 5°, all of them suitable for accesses to workshops and garages of the fleet and maintenance, as well as for the circulation of the vehicle along routes having important changes of gradient; and **characterized in that** is avoided the inclusion of steering-driving components in the interior passenger space of the vehicle, thus not hindering and/or preventing the use or access to determined areas of the same by elderly or handicapped people, or in general, people with reduced mobility, without discriminating these people in comparison with the remaining users.

2. Low floor suspended vehicle applicable to urban public transport, in accordance with the previous claim, **characterized in that** its right lateral side wall truss beam (RL) is built from a first upper framework structure (1), preferably formed by two horizontal bars (2,3) and by a series of contiguous rectangular cells, preferably defined by two vertical pillars (4,5) and a diagonal bar (6) coinciding, alternatively, with each one of the rectangle diagonals; being extended beneath this framework structure, preferably, a series of vertical (7), horizontal (8), and diagonal (9) pillars defining the right side of the vehicle and permitting the support of the components located at the upper part of the vehicle, including in the design of the right lateral side wall truss beam, the transits of the front wheel (10) and rear wheel (11), with a suitable distribution for the incorporation of the access doors, with ample dimensions to facilitate the entrance and exit of all types of vehicle users.

3. Low floor suspended vehicle applicable to urban public transport, in accordance with the previous claims, **characterized in that** its left lateral side wall truss beam (LL) is built from a first upper framework structure (1), preferably formed by two horizontal bars (2,3) and by a series of contiguous rectangular cells, preferably defined by two vertical pillars (4,5) and a diagonal bar (6) coinciding, alternatively, with each one of the rectangle diagonals, being extended beneath this framework structure, preferably, a series of vertical (7), horizontal (8) and diagonal (9) pillars determining the right side of the vehicle and permitting the support of the components situated in the upper part of the vehicle, including in the design of the left lateral side wall truss beam, the transits for the front wheel (10) and rear wheel (11).

4. Low floor suspended vehicle applicable to urban public transport, in accordance with the previous claims, **characterized in that** its front structure (FS) is defined in its elevation preferably by two vertical pillars (14,15) located at their ends and slightly inclined inwards, both vertical pillars being joined preferably by means of a series of horizontal bars (16) and diagonal bars (17) and defined at its sides, preferably, by a series of horizontal bars (18) of different lengths, by a vertical stepped bar (19) and a diagonal bar (20), assembling across the latter, the left and right lateral truss beams.

5. Low floor suspended vehicle applicable to urban public transport, in accordance to the previous claims, **characterized in that** its rear structure (RS) is defined in its elevation by a series of vertical bars (21) slightly inclined inwards, preferably joined by means of a series of horizontal bars (22) and defined at its sides by a series of horizontal bars (23) of different lengths joined by a series of slightly inclined vertical bars (21) and a last upper bar (24) more inclined towards the interior of the passenger space of the vehicle, being assembled across the latter, the left and right lateral side wall truss beams.

6. Low floor suspended vehicle, applicable to urban public transport, in accordance with the previous claims, **characterized in that** its upper or roof structure (US) preferably consists of a structure presenting a slight radius of curvature towards the interior of the passenger space of the vehicle and being defined preferably by a series of crossed bars forming angles of 90°, resulting from this form, a frame of rectangular cells.

7. Low floor suspended vehicle applicable to urban public transport, in accordance with the previous claims, **characterized in that** its lower or deck structure (DS) preferably consists of a flat structure defined by a series of crossed bars forming 90° angles.

8. Low floor suspended vehicle applicable to urban public transport, in accordance with the previous claims, **characterized in that**, optionally, it incorporates a rolling mechanism belonging to the shock absorbing system to make the vehicle incline sideways or totally descend by several centimeters, in this way reducing the difference of height between the ground and the platform or the low floor of the vehicle even more.

9. Low floor suspended vehicle applicable to urban public transport, in accordance with the previous claims, **characterized in that** the entrance and/or exit doors of the vehicle may be optionally equipped with retractable ramps adjustable in their unfolding, and for said retractable ramp option the height (H) of the space between the ground and the vehicle body is 270 mm; and with a gradient suitable to the dimensions and situation of the center of gravity of wheel chairs.

## Patentansprüche

1. Für den öffentlichen städtischen Transport anwendbares Fahrzeug mit Niederfluraufhängung, dessen Rumpf und Chassis eine linke seitliche Struktur (LL), rechte seitliche Struktur (RL), vordere Struktur (FS), hintere Struktur (RS), Flurstruktur (DS) und Dachstruktur (US) aufweist, die den strukturellen Widerstand zu den Ladezuständen und Diensten, die für den städtischen öffentlichen Transport vorgesehen sind, entgegenkommt, und die eine Höhenverringerung der Plattform oder des Niederflurs ohne eine nicht zulässige Verringerung des Raumes zwischen Erdboden und Fahrzeugkörper aufweist, **dadurch gekennzeichnet, dass** es eine am oberen Teil seiner rechten seitlichen Struktur (RL) und linken seitlichen Struktur (LL) des Fahrzeugaufbaus sich befindende Rahmenstruktur (1) aufweist, angemessen, weil alle Fahrzeugbestandteile von der besagten seitlichen Struktur hängen, und zwar derart, dass die Raumhöhe (H) zwischen Erdboden und Fahrzeugrumpf vorzugsweise einen Wert zwischen 250 mm und 300 mm, noch besser 270 mm; der Einganswinkel (a₁) des Fahrzeugs, als der Winkel definiert, der von der horizontalen Linie und der imaginären kontinuierlichen Linie gebildet wird, die sich, ohne den Chassis zu schneiden, bis hin zu den Vorderteil des Fahrzeugvorderteils erstreckt und sich durch Verbinden des Aufstützpunktes auf der Horizontalen der Räder an der Vorderachse mit dem tiefsten Punkt des Fahrzeugvorderteils zeichnet, und welcher vorzugsweise einen Wert zwischen 5° und 8°, noch besser einen Wert von 6° aufweist; der Fahrzeugausgangswinkel (a₂), definiert als der Winkel, welcher von der horizontalen Linie und der imaginären kontinuierlichen Linie gebildet wird, die sich, ohne den Chassis zu schneiden, bis hin zu den Hinterteil des Fahrzeugs erstreckt, und welche sich durch Verbinden des Aufstützpunktes auf der Horizontalen der Räder an der Hinterachse mit dem tiefsten Punkt des Fahrzeughinterteils zeichnet, und welcher vorzugsweise einen Wert zwischen 6° und 9°, noch besser einen Wert von 7° aufweist; und der Innenwinkel (a₃), definiert als der Winkel, welcher von der horizontalen Linie und der imaginären Linie gebildet wird, die sich durch Verbinden des Aufstützpunktes der Räder an der Vorderachse auf der Horizontalen mit dem tiefsten Punkt des Fahrzeugmittelteils zeichnet, und welcher vorzugsweise einen Wert zwischen 4° und 7°, noch besser einen Wert von 5° aufweist, wobei all diese Werte für den Zugang zu Werkstätten und Garagen der Flotten und Wartung, sowie für den Verkehr des Fahrzeugs auf Wegen, die weiten Gefällewinkel aufweisen, angemessen sind, um beispielsweise den Einbegriff von Bestandteilen im inneren Passagierraum zu verhindern, die den Zugang von älteren oder behinderten Personen, oder im Allgemeinem Leuten mit verringerter Beweglichkeit zu bestimmten Flächen verhindern, bzw. erschweren, ohne diese Leute im Vergleich mit den restlichen Benutzern zu diskriminieren.

2. Für den öffentlichen städtischen Transport anwendbares Fahrzeug mit Niederfluraufhängung, nach dem vorangehenden Anspruch, **gekennzeichnet dadurch**, dass seine rechte seitliche Struktur (RL) aus einer ersten oberen Rahmengestellstruktur (1) ausgebaut ist, die vorzugsweise aus zwei horizontalen Leisten (2, 3) und aus einer Reihe von angrenzenden rechteckigen Zellen, die vorzugsweise durch zwei senkrechte Stützpfeiler (4, 5) definiert sind, und eine diagonale Leiste (6), die abwechselnd mit jeder einzelnen Diagonale des Rechtecks übereinstimmt, gebildet ist, wobei sich unterhalb dieser Rahmengestellstruktur vorzugsweise eine Reihe von senkrechten (7), waagerechten (8) und diagonalen (9) Stützpfeilern erstreckt, welche die rechte Fahrzeugseite bestimmen und welche die Haltung der im Oberteil des Fahrzeugs sich befindenden Elemente ermöglichen, wobei im Entwurf der rechten seitlichen Struktur die vorderen (10) und hinteren (11), mit den nach der Aktuellen Regelung für Öffentliche Städtische Transportmittel erforderlichen Abmessungen versehenen Radabstände, mit angemessener Verteilung zum Einbau von mit weiten Zugangstüren zur Erleichterung des Ein- und Austiegs aller Fahrgäste, mit einbegriffen sind.

3. Für den öffentlichen städtischen Transport anwendbares Fahrzeug mit Niederfluraufhängung, nach den vorangehenden Ansprüchen, **gekennzeichnet dadurch,** dass seine linke seitliche Struktur (LL) aus einer ersten oberen Rahmengestellstruktur (1) ausgebaut ist, die vorzugsweise aus zwei horizontalen Leisten (2, 3) und aus einer Reihe von angrenzenden rechteckigen Zellen, die vorzugsweise durch zwei senkrechte Stützpfeiler (4, 5) definiert sind, und eine diagonale Leiste (6), die abwechselnd mit jeder einzelnen Diagonale des Rechtecks übereinstimmt, gebildet ist, wobei sich unterhalb dieser Rahmengestellstruktur vorzugsweise eine Reihe von senkrechten (7), waagerechten (8) und diagonalen (9) Stützpfeilern erstreckt, welche die linke Fahrzeugseite bestimmen und welce die Haltung der im Oberteil des Fahrzeugs sich befindenden Elemente ermöglichen, wobei im Entwurf der linken (rechten) seitlichen Struktur die vorderen (10) und hinteren (11) mit den nach der Aktuellen Regelung für Öffentliche Städtische Transportmittel erforderlichen Abmessungen versehenen Radabstände, mit einbegriffen sind.

4. Für den öffentlichen städtischen Transport anwendbares Fahrzeug mit Niederfluraufhängung nach den vorangehenden Ansprüchen, **dadurch gekennzeichnet, dass** seine vordere Struktur (FS) in ihrem Aufriss vorzugsweise durch zwei senkrechte, an ihren Enden sich befindende und leicht nach innen geneigte Stützpfeiler (14, 15), wobei beide vertikale Pfeiler vorzugsweise durch eine Reihe horizontaler Leisten (16) und diagonaler Leisten (17) verbunden sind, seitlich vorzugsweise durch eine Reihe horizontaler Leisten (18) mit unterschiedlichen Längen, durch eine vertikale abgestufte Leiste (19) und durch eine diagonale Leiste (20) definiert ist, wobei sie durch letztere in den linken und rechten seitlichen Strukturen eingebaut ist.

5. Für den öffentlichen städtischen Transport anwendbares Fahrzeug mit Niederfluraufhängung nach den vorangehenden Ansprüchen, **dadurch gekennzeichnet, dass** seine hintere Struktur (RS) in ihrem vertikalen Aufbau vorzugsweise durch eine Reihe senkrechter, leicht nach innen geneigte Leisten (21), die vorzugsweise durch eine Reihe horizontaler Leisten (22) verbunden sind, und an ihren Seiten durch vorzugsweise eine Reihe horizontaler Leisten (23) mit unterschiedlichen Längen, die durch eine Reihe von vertikalen, leicht nach innen geneigten Leisten (21) verbunden sind, und eine letzte obere, mehr zu dem Fahrgastraum des Fahrzeugs hin geneigte Leiste (24), definiert ist, wobei sie mittels letztere in den linken und rechten seitlichen Strukturen eingebaut ist.

6. Für den öffentlichen städtischen Transport anwendbares Fahrzeug mit Niederfluraufhängung nach den vorangehenden Ansprüchen, **dadurch gekennzeichnet, dass** seine obere, oder Dachstruktur (US) vorzugsweise aus einer Struktur besteht, die einen leichten Kurvenradius zu dem Inneren des Fahrgastraums des Fahrzeugs aufweist und welche vorzugsweise durch eine Reihe gekreuzter Leisten definiert wird, die 90°-Winkel bilden, aus deren Form ein Rahmengestell rechteckiger Zellen entsteht.

7. Für den öffentlichen städtischen Transport anwendbares Fahrzeug mit Niederfluraufhängung nach den vorangehenden Ansprüchen, **dadurch gekennzeichnet dass** seine untere oder Flurstruktur (DS) vorzugsweise aus einer Flachstruktur besteht, die durch eine Reihe von 90°Winkel bildenden, gekreuzter Leisten definiert wird.

8. Für den öffentlichen städtischen Transport anwendbares Fahrzeug mit Niederfluraufhängung nach den vorangehenden Ansprüchen, **dadurch gekennzeichnet, dass** es optional ein Rollenmechanismus einbegreift, der zum Stossdämpfersystem gehört, um das Fahrzeug seitlich um einige Zentimeter zu neigen oder völlig zu senken.

9. Für den öffentlichen städtischen Transport anwendbares Fahrzeug mit Niederfluraufhängung nach den vorangehenden Ansprüchen, **dadurch gekennzeichnet, dass** die Ein- und Ausgangstüre optional mit einfahrbaren, in ihrer Auffaltung einstellbare Rampen ausgestattet sein können, mit einem vorzugsweise den Abmessungen und der Situation des Schwerpunktzentrums der Radsattel angepassten Gradient.

## Revendications

1. Véhicule suspendu de plancher surbaissé, applicable au transport public urbain, dont la carrosserie et le châssis configurent une structure latérale gauche (LL), latérale droite (RL), frontale (FS) et derrière (RS), basse (DS) et du toit (US), qui accomplit la resistance structurelle pour les états de charge et des services prevues dans le transport collectif urbain, et qui montre une reduction d'hauteur de la plateforme ou plancher surbaissé sans une reduction non-admissible du vide rémanent entre la terre et la carrosserie du véhicule, **caractérisé en ce qu'**il présente une structure entreillis (1) située dans la partie supérieure de ses structures latérale droite (RL), latérale gauche (LL) de l'structure du véhicule, approprié pour ce que tous les composants du véhicule pendent de ladite structure supérieure, de telle sorte que l'hauteur (H) du vide rémanent entre le sol et la carrosserie du véhicule prend de préférence une valeure entre 250 mm et 300 mm, mieux, de 270 mm; l'angle d'entrée (a1) du véhicule defini comme l'angle formé par le trait horizontal et la ligne continue imaginaire étendant vers l'avant du véhicule sans couper son châssis, tracé en joignant le point du support des pneus de l'essieu avant au-dessus de l'horizontale et le point plus bas de la partie avant du véhicule, de préference ayant une valeure entre 5° et 8°, mieux, 6°; l'angle de sortie du véhicule (a2) défini comme l'angle formé par le trait horizontal et la ligne continue imaginaire étendant vers la partie arrière du véhicule sans couper son châssis, tracé en joignant le point du support des pneus de l'essieu arrière au-dessus de l'horizontale et le point plus bas de la partie arrière du véhicule, de préference ayant une valeure entre 6° et 9°, mieux, 7°; et l'angle intérieur du véhicule (a3) defini comme l'angle formé par le trait horizontal et la ligne continue imaginaire étendant vers l'avant du véhicule sans couper son châssis, tracé en joignant le point du support des pneus de l'essieu avant au-dessus de l'horizontale et le point plus bas de la partie moyenne du véhicule, de préference ayant une valeure entre 4° et 7°, mieux, 5°,; tous appropiés pour l'accès aux ateliers et garages de flotte et entretien, comme pour la circulation du véhicule sur des routes avec une changement de gradient, en evitant, de même, l'inclusion des composants dans l'espace intérieur des passagers du véhicule, qui rendrent difficile ou empêchent l'utilisation ou accès au véhicule des gens avec la mobilité réduite, sans la discrimination de ces personnes en comparaison avec les utilisateurs restants.

2. Véhicule suspendu de plancher surbaissé applicable au transport public urbain, selon la revindication précédente, **caractérisé en ce que** son structure latérale droite (RL) est etablie d'une première structure entreillis supérieur (1) formée de préference par deux barres horizontales (2, 3), et par une série de cellules contiguës rectangulaires definies de préférence par deux piliers verticaux (4, 5) et une barre diagonale (6) coincïdant alternativement avec chacune des diagonales du rectangle, étendu au-dessous de cette structure entreillis, de préference, un série de piliers vérticaux (7), horizontales (8) et diagonales (9) qui déterminent la côté droite du véhicule, et qui permettent le support des composants situés dans la partie supérieure du véhicule, êtant compris dans le dessin de la structure latérale droite les passages avant roue (10) et arrière roue (11), avec les dimensions adéquats au réglement actuel por le transport public urbain, et avec suffisant dimension pour faciliter l'entrée et sortie de tout utilisateur du véhicule.

3. Véhicule suspendu de plancher surbaissé applicable au transport public urbain, selon les revindications précédentes **caractérisé en ce que** son structure latérale gauche (LL) est etablie d'une première structure entreillis supérieur (1) formée de préference par deux barres horizontales (2, 3), et par un série de cellules contiguës rectangulaires definies de préférence par deux piliers verticaux (4, 5) et une barre diagonale (6) coincïdant alternativement avec chacune des diagonales du rectangle, étendu au-dessous de cette structure entreillis, de préference, un série de piliers vérticaux (7), horizontales (8) et diagonales (9) qui déterminent la côté gauche du véhicule, et qui permettent le support des composants situés dans la partie supérieure du véhicule, êtant compris dans le dessin de la structure latérale gauche (droite) les passages avant roue (10) et arrière roue (11), avec les dimensions adéquats au réglement actuel por le transport public urbain.

4. Véhicule suspendu de plancher surbaissé, applicable au transport public urbain, selon les revindications précédentes, **caractérisé en ce que** son structure frontale (FS) de préférence et définie en son levé par deux piliers vérticaux (14, 15) situés dans ses extremités, et qui se trouvent légèrement penchés vers l'intérieur, les deux piliers vérticaux se joignant de préférence au moyens d'un série de barres horizontales (16), et diagonales (17), et de préférence definie dans ses côtés par un série de barres horizontales (18) de differents longeurs, par une barre verticale échelonnée (19), et par barre diagonale (20), s'assemblant à travers de ceux-ci avec les structures latérales gauche et droite.

5. Véhicule suspendu de plancher surbaissé, applicable au transport public urbain, selon les revindications précédentes, **caractérisé en ce que** son structure dérrière (RS) de préférence et définie en son levé par un série de barres verticaux (21) légèrement penchés vers l'intérieur, se joignant de préférence au moyens d'un série de barres horizontales (22), et de préférence definie dans ses côtés par un série de barres horizontales (23) de differents longeurs, joignées par un série de barres verticales (21) légèrement penchées, et par une dernière barre supérieure (24) plus penchée vers l'intérieur de la cabine du véhicule, s'assemblant à travers de ceux-ci avec les structures latérales gauche et droite.

6. Véhicule suspendu de plancher surbaissé, applicable au transport public urbain, selon les revindications précédentes, **caracterisé en ce que** son structure supériure (US) ou du toit, de préférence est constituée d'une structure qui présente un légère rayon de courbure vers l'íntérieure de la cabine du véhicule, et qui est defini de préférence par un série de barres croisees formant des angles de 90°, de telle sorte résultant un treillis de cellules rectangulaires.

7. Véhicule suspendu de plancher surbaissé, applicable au transport public urbain, selon les revindications précédentes, **caractérisé en ce que** son structure infériure (DS) ou du sol, de préférence est constituée d'une structure plaine definie par un série de barres croisées formant des angles de 90°.

8. Véhicule suspendu de plancher surbaissé, applicable au transport public urbain, selon les revindications précédentes, **caractérisé en ce que,** sur option, il incorpore une mécanisme de roulement appartenant au système d'absortion de choc pour faire le véhicule s'incliner en longueur ou descendre totalement par plusieurs centimètres, de cette façon réduisant encore plus la différence du vide entre la terre et la plateforme ou le bas plancher du véhicule.

9. Véhicule suspendu de plancher surbaissé, applicable au transport public urbain, selon les revindications précédentes, **caractérisé en ce que** les portes d'entrée et/ou sortie du véhicule sur option peuvent être pourvues de rampes rétractiles et réglables en leur déploiement, avec une pente de préférence adéquate aux dimensions et situation du centre de gravitié des assièges de roue.
